**Europäisches Patentamt**

**European Patent Office**

**Office européen des brevets**

(19)

(11) Veröffentlichungsnummer: **0 059 445**

**A1**

(12) ## EUROPÄISCHE PATENTANMELDUNG

(21) Anmeldenummer: 82101478.4

(22) Anmeldetag: 26.02.82

(51) Int. Cl.³: **B 01 D 53/34**

(30) Priorität: 04.03.81 DE 3108075

(43) Veröffentlichungstag der Anmeldung:
08.09.82 Patentblatt 82/36

(84) Benannte Vertragsstaaten:
BE CH DE FR GB IT LI NL

(71) Anmelder: BASF Aktiengesellschaft
Carl-Bosch-Strasse 38
D-6700 Ludwigshafen(DE)

(72) Erfinder: Grosskinsky, Otto-Alfred, Dr.
Semmelweisstrasse 8
D-6700 Ludwigshafen(DE)

(72) Erfinder: Frommer, Elmar, Dr.
Lisztstrasse 117
D-6700 Ludwigshafen(DE)

(72) Erfinder: Rapp, Guenther, Dr.
Mundenheimer Strasse 174
D-6700 Ludwigshafen(DE)

(72) Erfinder: Thomas, Erwin
Borngasse 12
D-6713 Freinsheim(DE)

(72) Erfinder: Schmitz, Ruediger
Roemerstrasse 2
D-6715 Lambsheim(DE)

(54) **Verfahren zur Entfernung von Distickstoffoxid aus solches enthaltenden Abgasen.**

(57) Verfahren zur Entfernung von Distickstoffoxid aus solches enthaltenden Abgasen, die bei der Herstellung von Hydroxylammoniumsalzen durch katalytische Reduktion von Stickstoffmonoxid mit Wasserstoff in wäßrigen Lösungen von Mineralsäuren in Gegenwart von suspendierten Edelmetallkatalysatoren erhalten worden sind, wobei man die Abgase mit Wasser wäscht.

EP 0 059 445 A1

BASF Aktiengesellschaft                    O.Z. 0050/034986

Verfahren zur Entfernung von Distickstoffoxid aus solches
enthaltenden Abgasen

Gegenstand der Erfindung ist ein Verfahren zur Entfernung
von Distickstoffoxid aus solches enthaltenden Abgasen,
die bei der Herstellung von Hydroxylammoniumsalzen durch
katalytische Reduktion von Stickstoffmonoxid mit Wasserstoff in wäßrigen Lösungen von Mineralsäuren in Gegenwart
von suspendierten Edelmetallkatalysatoren erhalten worden
sind.

Bei der Herstellung von Hydroxylammoniumsalzen durch katalytische Hydrierung von Stickstoffmonoxid mit Wasserstoff
entsteht als Nebenprodukt u.a. Distickstoffoxid. Da
der Umsatz nicht quantitativ ist erhält man somit Abgase,
die Wasserstoff, Stickstoffmonoxid und Distickstoffoxid
enthalten. Solche Gase sind insbeondere unter erhöhtem
Druck explosiv. Da die Abgase jedoch wertvolle Ausgangsstoffe enthalten besteht der Bedarf, diese wieder zu verwenden. Aus der Europäischen Patentanmeldung 0 008 479 ist
schon bekannt, daß man Hydroxylammoniumsalze durch katalytische Reduktion von Stickstoffmonoxid mit Wasserstoff in
zwei getrennten hintereinander geschalteten Reaktionszonen
durchführt, wobei man von sehr reinen Ausgangsgasen ausgeht. Die Verwendung von reinen Ausgangsgasen ist jedoch
technisch sehr aufwendig. Abgesehen davon wird kein Hinweis gegeben, wie die Abgase gefahrlos wiederverwendet
werden können. Ferner ist aus der genannten Europäischen
Patentansmelung bekannt, daß man dem verwendeten Stickstoffmonoxid und Wasserstoff 10 bis 80 Vol.-% Inertgas
zusetzt, um im Abgas kein explosives Gemisch zu erhalten.
Die Mitverwendung von den Inertgasen erschwert jedoch die
Wiederverwendung solcher Abgase. Ein Hinweis wie hierbei
zu verfahren ist wird nicht gegeben.

Bk/P

Es war deshalb die technische Aufgabe gestellt, die bei der Herstellung von Hydroxylammoniumsalzen durch katalytische Reduktion von Stickstoffmonoxid mit Wasserstoff anfallenden Distickstoffoxid enthaltenden Abgase so zu behandeln, daß sie gefahrlos für die Hydroxylammoniumsalzsynthese wieder verwendet werden können.

Diese Aufgabe wird gelöst in einem Verfahren zur Entfernung von Distickstoffoxid aus solches enthaltenden Abgasen, die bei der Herstellung von Hydroxylammoniumsalzen durch katalytische Reduktion von Stickstoffmonoxid mit Wasserstoff in wäßrigen Lösungen von Mineralsäuren in Gegenwart von suspendierten Edelmetallkatalysatoren erhalten worden sind, wobei man die Abgase mit Wasser wäscht.

Das neue Verfahren hat den Vorteil, daß aus den bei der Hydroxylaminsynthese anfallenden Abgasen Distickstoffoxid auf einfache Weise entfernt wird. Ferner hat das neue Verfahren den Vorteil, daß die so gereinigten Abgase ohne Gefahr bei der Hydroxylaminsynthese, insbesondere unter erhöhtem Druck wiederverwendet werden können, ohne daß hierbei Distickstoffoxidgehalte im Abgas auftreten, die innerhalb der Explosionsgrenzen liegen.

Bei der Herstellung von Hydroxylammoniumsalzen geht man von Stickstoffmonoxid und Wasserstoff aus. In der Regel hält man ein Molverhältnis von Wasserstoff zu Stickstoffmonoxid von 1,5 : 1 bis 6 : 1 ein. Besonders gute Ergebnisse erhält man, wenn darauf achtet, daß in der Reaktionszone ein Molverhältnis von Wasserstoff zu Stickstoffmonoxid von 3,5 bis 5 : 1 aufrecht erhalten wird. Es ist nicht notwendig reine Ausgangsgase zu verwenden. Stickstoffmonoxid und Wasserstoff die für die Umsetzung verwendet werden, können z.B. bis zu 10 Vol.-% Inertgase, z.B. Stickstoff, enthalten.

Vorteilhaft verwendet man als Säuren starke Mineralsäuren, wie Chlorwasserstoffsäure, Salpetersäure, Schwefelsäure oder Phosphorsäure. Geeignet sind auch deren sauren Salze wie Ammoniumbisulfat. Besonders bevorzugt wird Schwefelsäure und/oder Ammoniumbisulfat verwendet. In der Regel geht man von 4 bis 6 normalen wäßrigen Säuren aus und läßt im Verlauf der Reaktion die Säurekonzentration nicht unter 0,2 normal fallen.

Die Umsetzung führt man vorteilhaft bei Temperaturen von 30 bis 80°C durch. Besonders bewährt haben sich Temperaturen von 40 bis 60°C. In der Regel führt man die Umsetzung bei Atmosphärendruck oder erhöhtem Druck z.B. bis zu 100 bar durch. Besonders gute Raumzeitausbeuten erhält man, wenn man Drücke von 1,5 bis 30 bar anwendet.

Die katalytische Reduktion wird in Gegenwart von suspendierten Edelmetallkatalysatoren durchgeführt. Vorteilhaft verwendet man Platinträgerkatalysatoren. Besonders bewährt haben sich Platin auf Kohleträger, insbesondere auf Graphit. Vorzugsweise hat ein solcher Trägerkatalysator einen Gehalt von 0,2 bis 5 Gew.-% Platin. In der Regel enthalten die Katalysatoren zusätzlich ein oder mehrere Elemente der fünften und/oder sechsten Hauptgruppen des periodischen Systems mit einem Atomgewicht > 31, ferner Blei und/oder Quecksilber als vergiftende Mittel. Geeignete Katalysatoren und deren Herstellung werden beispielsweise beschrieben in der der DE-PS 920 963, 956 038, 945 752 oder 1 088 037. Während der Reaktion wird der Edelmetallkatalysator durch geeignete Mittel, z.B. durch Rühren in Suspension, gehalten. Ein geeignetes kontinuierliches Verfahren wird beispielsweise in der DE-PS 1 177 118 beschrieben.

Da die Umsetzung von Stickstoffmonoxid und Wasserstoff
nicht quantitativ ist, erhält man Abgase die in der Regel
73 bis 85 Vol.-% Wasserstoff, 5 bis 13 Vol.-% Stickstoffmonoxid, 3 bis 8 Vol.-% Distickstoffoxid und in Abhängigkeit von der Reinheit des verwendeten Stickstoffmonoxid
und Wasserstoffs bis zu 30 Vol.-% Intertgase z.B. Stickstoff enthalten. Ein typisches Gemisch enthält beispielsweise 73 bis 77 Vol.-% Wasserstoff, 8 bis 12 Vol.-% Stickstoffmonoxid, 5 bis 7,5 Vol.-% Distickstickstoffoxid und 7
bis 10 Vol.-% Stickstoff. Diese Distickstoffoxid enthaltenden Abgase werden mit Wasser gewaschen. Vorteilhaft führt
man die Wasserwäsche in Gegenstrom in geeigneten Vorrichtungen, z.B. Kolonnen, durch. Geeignete Kolonnen sind
beispielsweise Siebboden, Glockenboden oder Füllkörperkolonnen. In der Regel haben solche Kolonnen 3 bis
10 Böden. Vorteilhaft führt man die Wasserwäsche bei einer
Temperatur von 20 bis 60°C durch. Es hat sich bewährt,
wenn man je m³ Abgas 80 bis 300 l Wasser anwendet. Die
Wasserwäsche kann drucklos oder unter erhöhtem Druck z.B.
bis zu 50 bar, vorteilhaft 1,5 bis 30 bar durchgeführt
werden. Falls das Abgas unter erhöhtem Druck bei der
Synthese von Hydroxylammoniumsalzen, z.B. 5 bis 20 bar
anfällt ist es zweckmäßig, die Wasserwäsche unter dem
Druck durchzuführen unter dem das Abgas anfällt. Ein so
gereinigtes Abgas enthält neben Wasserstoff, Stickstoffmonoxid und Inertgasen noch bis zu 1,5 Vol.-% Distickstoffoxid.

Durch Wasserwäsche gereinigte Abgase nach der Erfindung,
verwendet man vorteilhaft wieder für die Herstellung von
Hydroxylammoniumsalzen. Die Abgase können dem frisch zugeführten Wasserstoff zugemischt werden. Vorteilhaft
ergänzt man jedoch das Abgas durch Zugabe von Stickstoffmonoxid bis die eingangs erwähnten Molverhältnisse wieder
erreicht sind, und verwendet es in einer gesonderten Reaktionszone zur Herstellung von Hydroxylammoniumsalzen, insbesondere unter Drücken von 1,5 bis 30 bar.

Hydroxylammoniumsalze eignen sich zur Herstellung von Oximen.

Das Verfahren nach der Erdingung nach der Erfindung sei im folgenden Beispiel veranschaulicht.

Beispiel

In einer Rührkesselkaskade, bestehend aus 5 Rührkesseln, wird jeweils 5 l 4,3 n Schwefelsäure und 500 g Platingraphitträgerkatalysator mit einem Platingehalt von 0,5 Gew.-% vorgelegt. Unter starkem Rühren leitet man in jeden Rührkessel von unten stündlich 2 Nm$^3$ Wasserstoff und 1,2 Nm$^3$ 96 Vol.-%ige Stickstoffmonoxid ein. Gleichzeitig führt man dem ersten Rührkessel stündlich 56,3 l 4,3 n Schwefelsäure sowie Katalysator zu und entnimmt dem fünften Rührkessel die entsprechende Menge Reaktionsgemisch. Der Katalysator wird abgetrennt und wieder dem ersten Rührkessel zugeführt. Die Reaktion wird bei einer Temperatur von 40°C und unter einem Druck von 20 bar durchgeführt. Es fallen stündlich insgesamt 2 720 l Abgas an mit folgender Zusammensetzung: 76,6 Vol.-% Wasserstoff, 12,6 Vol.-% Stickstoffmonoxid, 7,4 Vol.-% Distickstoffoxid und 8,8 Vol.-% Stickstoff. Das Abgas wird ohne zu entspannen unter dem Druck unter dem es anfällt (20 bar) in eine mit Raschig-Ringen gefüllte Druckkolonne von 60 mm Durchmesser und 1000 mm Höhe von unten mit einem Druck von 20 bar zugeführt. Gleichzeitig beschickt man die Kolonne von oben stündlich mit 300 l Wasser von 20°C. Dem Kopf entnimmt man stündlich 2 580 l gereinigtes Gas mit folgender Zusammensetzung: 78,3 Vol.-% Wasserstoff, 12,2 Vol.-% Stickstoffmonoxid, 0,4 Vol.-% Distickstoffoxid und 9,1 Vol.-% Stickstoff. Das gewaschene Abgas wurde dann in einem 6. Rührkessel bei 18 bar und 40°C unter Zusatz von stündlich 850 l Stickstoffmonoxid mit einer wäßrigen Lösung von Schwefelsäure, die suspendierten Platinkatalysator enthält, umgesetzt.

Das hierbei anfallende Abgas mit 52,4 Vol.-% Wasserstoff, 8,0 Vol.-% Stickstoffmonoxid, 7,1 Vol.-% Distickstoffoxid und 32,5 Vol.-% Stickstoff liegt unter dem angewandten Druck außerhalb des Explosionsbereichs.

Patentansprüche

1. Verfahren zur Entfernung von Distickstoffoxid aus solches enthaltenden Abgasen, die bei der Herstellung von Hydroxylammoniumsalzen durch katalytische Reduktion von Stickstoffmonoxid mit Wasserstoff in wäßrigen Lösungen von Mineralsäuren in Gegenwart von suspendierten Edelmetallkatalysatoren erhalten worden sind, dadurch gekennzeichnet, daß man die Abgase mit Wasser wäscht.

2. Verfahren nach Anspruch 1, dadurch gekennzeichnet, daß man die Abgase unter einem Druck von 1,5 bis 30 bar mit Wasser wäscht.

3. Verfahren nach den Ansprüchen 1 und 2, dadurch gekennzeichnet, daß man je m$^3$ Abgas 80 bis 300 l Wasser anwendet.

4. Verfahren nach den Ansprüchen 1 bis 3, dadurch gekennzeichnet, daß man die Abgase bei einer Temperatur von 20 bis 60°C mit Wasser wäscht.

5. Verwendung von Abgasen nach Anspruch 1 zu Herstellung von Hydroxylammoniumsalzen unter erhöhtem Druck.

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A- 498 223 (U.S. FIRE PROTECTION CORP.) <br> * Seite 1, Zeilen 32-37 * <br><br> ----- | 1 | B 01 D 53/34 |

RECHERCHIERTE
SACHGEBIETE (Int. Cl. ³)

B 01 D 53/00
C 01 B 21/00

Der vorliegende Recherchenbericht wurde für alle Patentansprüche erstellt.

| Recherchenort DEN HAAG | Abschlußdatum der Recherche 22-06-1982 | Prüfer BOGAERTS M.L.M. |
|---|---|---|